# EUROPEAN PATENT APPLICATION

(11) **EP 4 610 801 A1**
(43) Date of publication of application: **03.09.2025**
(21) Application number: 23881896.7
(22) Date of filing: 25.10.2023
(51) Int. Cl.: G06F 3/04883

(54) **LOCK SCREEN INTERFACE OPERATING METHOD AND APPARATUS, ELECTRONIC DEVICE, AND MEDIUM**

(30) Priority: 28.10.2022 CN 202211335220
(71) Applicant: Vivo Mobile Communication Co., Ltd., Dongguan, Guangdong 523863 (CN)
(72) Inventor: ZHAO, Qian, Dongguan, Guangdong 523863 (CN)
(74) Representative: Murgitroyd & Company
(86) International application number: PCT/CN2023/126580
(87) International publication number: WO 2024/088319

(57) **Abstract**

This application discloses a method and an apparatus for operating a lock screen interface, an electronic device, and a medium, and relates to the field of electronic technology. The method for operating a lock screen interface includes: displaying multiple messages on the lock screen interface; receiving a first input for a target message among the multiple messages; and in response to the first input, unlocking the lock screen interface and displaying a target interface. The target interface includes at least one of the following: an interface displayed after performing a target operation on the target message, an interface displayed after performing a next operation corresponding to the target message on the target message, and an interface including an identifier of a next operation corresponding to the target message.

## Description

### CROSS-REFERENCE TO RELATED APPLICATION

This application claims priority to Chinese Patent Application No. 202211335220.0 filed in China on October 28, 2022, which is incorporated herein by reference in its entirety.

### TECHNICAL FIELD

This application pertains to the field of electronic technology, and specifically relates to a method and an apparatus for operating a lock screen interface, an electronic device, and a medium.

### BACKGROUND

With the development of smart terminal technology, the number of applications installed on electronic devices is growing. To meet user experience, electronic devices need to support management of these application functions on the lock screen interface.

In the related art, electronic devices display every application function on the lock screen interface. When an operation needs to be performed on an application function, it is necessary to unlock the screen first, then navigate to the full screen, and finally perform the operation on the application function. As a result, the steps for performing operations on application functions are quite cumbersome.

### SUMMARY

Embodiments of this application aim to provide a method and an apparatus for operating a lock screen interface, an electronic device, and a medium, to address the issues of low tidiness of the lock screen interface and the cumbersome steps for performing operations on application functions.

According to a first aspect, an embodiment of this application provides a method for operating a lock screen interface. The method includes: displaying multiple messages on the lock screen interface; receiving a first input for a target message among the multiple messages; and in response to the first input, unlocking the lock screen interface and displaying a target interface; where the target interface includes at least one of the following: an interface displayed after performing a target operation on the target message, an interface displayed after performing a next operation corresponding to the target message on the target message, and an interface including an identifier of a next operation corresponding to the target message.

According to a second aspect, an embodiment of this application provides an apparatus for operating a lock screen interface. The apparatus includes: a display module and a receiving module, where the display module is configured to display multiple messages on the lock screen interface; the receiving module is configured to receive a first input for a target message among the multiple messages displayed by the display module; and the display module is further configured to, in response to the first input received by the receiving module, unlock the lock screen interface and display a target interface; where the target interface includes at least one of the following: an interface displayed after performing a target operation on the target message, an interface displayed after performing a next operation corresponding to the target message on the target message, and an interface including an identifier of a next operation corresponding to the target message.

According to a third aspect, an embodiment of this application provides an electronic device. The electronic device includes a processor and a memory, the memory stores a program or instructions that are executable on the processor, and when the program or instructions are executed by the processor, steps of the method according to the first aspect are implemented.

According to a fourth aspect, an embodiment of this application provides a readable storage medium, where the readable storage medium stores a program or instructions, and when the program or the instructions are executed by a processor, steps of the method according to the first aspect are implemented.

According to a fifth aspect, an embodiment of this application provides a chip, where the chip includes a processor and a communication interface, the communication interface is coupled to the processor, and the processor is configured to run a program or instructions so as to implement the method according to the first aspect.

According to a sixth aspect, an embodiment of this application provides a computer program product, where the program product is stored in a storage medium, and the program product is executed by at least one processor to implement the method according to the first aspect.

In the embodiments of this application, the electronic device can display multiple messages on the lock screen interface, and then receive a first input for a target message among the multiple messages, so as to unlock the lock screen interface and display a target interface; where the target interface includes at least one of the following: an interface displayed after performing a target operation on the target message, an interface displayed after performing a next operation corresponding to the target message on the target message, and an interface including an identifier of a next operation corresponding to the target message. In this way, the electronic device can unlock the lock screen interface and display the subsequent target interface by receiving an input from the user, thereby simplifying the steps for the electronic device to display the target interface.

### BRIEF DESCRIPTION OF DRAWINGS

FIG. 1 is a first schematic flowchart of a method for operating a lock screen interface according to an embodiment of this application;
FIG. 2 is a first schematic diagram of an interface example used by a method for operating a lock screen interface according to an embodiment of this application;
FIG. 3 is a second schematic diagram of an interface example used by a method for operating a lock screen interface according to an embodiment of this application;
FIG. 4 is a third schematic diagram of an interface example used by a method for operating a lock screen interface according to an embodiment of this application;
FIG. 5 is a fourth schematic diagram of an interface example used by a method for operating a lock screen interface according to an embodiment of this application;
FIG. 6 is a fifth schematic diagram of an interface example used by a method for operating a lock screen interface according to an embodiment of this application;
FIG. 7 is a sixth schematic diagram of an interface example used by a method for operating a lock screen interface according to an embodiment of this application;
FIG. 8 is a seventh schematic diagram of an interface example used by a method for operating a lock screen interface according to an embodiment of this application;
FIG. 9 is an eighth schematic diagram of an interface example used by a method for operating a lock screen interface according to an embodiment of this application;
FIG. 10 is a ninth schematic diagram of an interface example used by a method for operating a lock screen interface according to an embodiment of this application;
FIG. 11 is a tenth schematic diagram of an interface example used by a method for operating a lock screen interface according to an embodiment of this application;
FIG. 12 is an eleventh schematic diagram of an interface example used by a method for operating a lock screen interface according to an embodiment of this application;
FIG. 13 is a twelfth schematic diagram of an interface example used by a method for operating a lock screen interface according to an embodiment of this application;
FIG. 14 is a thirteenth schematic diagram of an interface example used by a method for operating a lock screen interface according to an embodiment of this application;
FIG. 15 is a fourteenth schematic diagram of an interface example used by a method for operating a lock screen interface according to an embodiment of this application;
FIG. 16 is a fifteenth schematic diagram of an interface example used by a method for operating a lock screen interface according to an embodiment of this application;
FIG. 17 a sixteenth schematic diagram of an interface example used by a method for operating a lock screen interface according to an embodiment of this application;
FIG. 18 a seventeenth schematic diagram of an interface example used by a method for operating a lock screen interface according to an embodiment of this application;
FIG. 19 an eighteenth schematic diagram of an interface example used by a method for operating a lock screen interface according to an embodiment of this application;
FIG. 20 is a nineteenth schematic diagram of an interface example used by a method for operating a lock screen interface according to an embodiment of this application;
FIG. 21 is a twentieth schematic diagram of an interface example used by a method for operating a lock screen interface according to an embodiment of this application;
FIG. 22 is a schematic structural diagram of an apparatus for operating a lock screen interface according to an embodiment of this application;
FIG. 23 is a schematic structural diagram of an electronic device according to an embodiment of this application; and
FIG. 24 is a schematic diagram of hardware of an electronic device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects instead of describing a specific order or sequence. It should be understood that data used in this way is used interchangeably in appropriate circumstances so that the embodiments of this application can be implemented in other orders than the order illustrated or described herein. In addition, "first" and "second" are usually used to distinguish objects of a same type, and do not restrict a quantity of objects. For example, there may be one or multiple first objects. In addition, "and/or" in the specification and claims represents at least one of connected objects, and the character "/" generally indicates that the associated objects have an "or" relationship.

The following describes in detail a method and an apparatus for operating a lock screen interface, an electronic device, and a medium provided in the embodiments of this application with reference to the accompanying drawings and specific embodiments and application scenarios.

The method for operating a lock screen interface in the embodiments of this application is applied in scenarios of operating application functions on the lock screen interface. The specific application scenarios can be determined according to usage needs, and are not limited in this application.

For example, the scenario of opening a notification message 1 on the lock screen interface is used as an example. In the related art, after receiving a notification message 1, the electronic device displays the notification message 1 on the lock screen interface. If a user wants to open the notification message 1, the user needs to tap the notification message 1 first, then unlock the screen, navigate to the full-screen display interface corresponding to the notification message 1, and finally perform an operation on the notification message 1. In this solution, all notification messages are displayed on the lock screen interface, it is necessary to navigate to the full-screen interface of the application to open the notification message. Therefore, the steps for opening the notification messages are relatively cumbersome.

In the embodiment of this application, after receiving a notification message 1, the electronic device displays the notification message 1 on the lock screen interface. If a user wants to open the notification message 1, the user can make an input for the notification message 1 to directly display an interface corresponding to the notification message 1 after unlocking the screen. Since the electronic device can unlock the lock screen interface and directly display the interface corresponding to the notification message by receiving the input for the notification message, the steps for opening notification messages are simplified.

The method for operating a lock screen interface provided in this embodiment can be executed by an apparatus for operating a lock screen interface, and the apparatus for operating a lock screen interface can be an electronic device or a control module or processing module in the electronic device. The technical solutions provided by the embodiments of this application are described below by using an electronic device as an example.

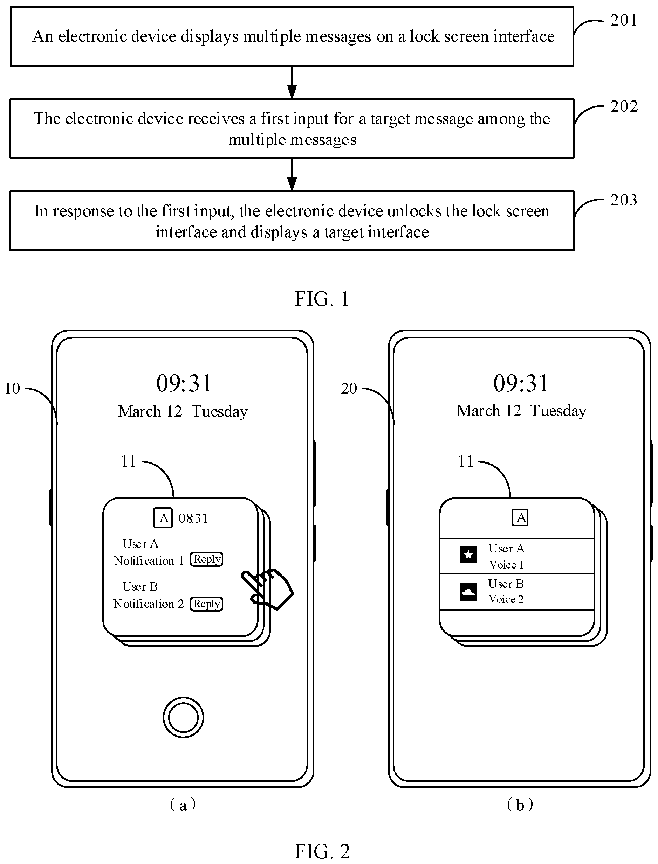

An embodiment of this application provides a method for operating a lock screen interface. As shown in FIG. 1, the method for operating a lock screen interface may include the following steps 201 to 203.

Step 201. An electronic device displays multiple messages on the lock screen interface.

In this embodiment of this application, the multiple messages may be instant messaging messages received by the electronic device or messages generated by the electronic device.

For example, the instant messaging messages may be different messages of a same application or messages of different applications.

Step 202. The electronic device receives a first input for a target message among the multiple messages.

In this embodiment of this application, the first input is used to trigger the electronic device to display an interface corresponding to the target message.

In the embodiment of this application, the first input may include: a touch input from the user (for example, a tap input), a voice instruction input by the user, or a specific gesture input by the user, which can be specifically set according to actual needs.

For example, the tap input may be a single-tap input, a double-tap input, an input of any number of taps; the tap input may alternatively be a long-press input or a short-tap input; and the specific gesture may be any one of a single-tap gesture, a swipe gesture, a pressure recognition gesture, a long-press gesture, an area change gesture, a double-press gesture, and a double-tap gesture, which may be specifically set according to actual needs.

In the embodiment of this application, the target message is any one of the multiple messages.

Step 203. In response to the first input, the electronic device unlocks the lock screen interface and displays a target interface.

In the embodiment of this application, the target interface includes at least one of the following:
an interface displayed after performing a target operation on the target message;
an interface displayed after performing a next operation corresponding to the target message on the target message; and
an interface including an identifier of a next operation corresponding to the target message.

In the embodiment of this application, the target operation is an operation indicated by the first input.

In the method for operating a lock screen interface in the embodiments of this application, the electronic device can display multiple messages on the lock screen interface, and then receive a first input for a target message among the multiple messages, so as to unlock the lock screen interface and display a target interface; where the target interface includes at least one of the following: an interface displayed after performing a target operation on the target message, an interface displayed after performing a next operation corresponding to the target message on the target message, and an interface including an identifier of a next operation corresponding to the target message. In this way, the electronic device can unlock the lock screen interface and display the subsequent target interface by receiving an input from the user, thereby simplifying the steps for the electronic device to display the target interface.

Optionally, in an embodiment of this application, the step 201 that the electronic device displays multiple messages on the lock screen interface may include the following step 201a.

Step 201a. The electronic device displays multiple message cards on the lock screen interface.

In the embodiment of this application, the multiple message cards may be floating on the lock screen interface.

In the embodiment of this application, each message card among the multiple message cards includes at least one of the multiple messages.

For example, one message card may include one message. That is, one message card corresponds to one message.

For example, one message card may include multiple messages of one application. That is, one message card corresponds to one application.

Further, with reference to the above step 201a, the step 202 that the electronic device receives a first input for a target message among the multiple messages may include the following step 202a.

Step 202a. The electronic device receives a first input for a target message card among the multiple message cards.

In the embodiment of this application, the target message card is any one of the multiple message cards.

Further, with reference to the above steps 201a and 202a, the step 203 that the electronic device displays a target interface may include the following step 203a.

Step 203a. The electronic device displays the target interface on the target message card.

For example, as shown in FIG. 2(a), the electronic device displays a message card 11 of an application A on the lock screen interface 10, and displays message cards of application B and application C in an overlaid manner. Next, the user taps the message card 11. As shown in FIG. 2(b), an application interface corresponding to the application A is displayed on the message card 11.

In this way, multiple messages are displayed in message cards, and an interface corresponding to a message is directly displayed on the message card after the user input for the message card is received, thereby improving efficiency of the electronic device in displaying interfaces.

In a possible embodiment, the user may update the target message displayed on the target message card by performing an input for the target message card.

Optionally, in an embodiment of this application, after step 201a, the method for operating a lock screen interface in the embodiments of this application may further include the following steps 201a1 and 201a2.

Step 201a1. The electronic device receives a second input for the target message card.

In the embodiment of this application, the second input is used to trigger the electronic device to switch a message card.

In the embodiment of this application, the second input may be a swipe input for the target message card, or other feasible inputs.

For example, when the second input is a swipe-left input, the electronic device can switch the target message card to display another message card.

For example, when the second input is a swipe-right input, the electronic device can exit from the target message card, that is, no message card is displayed on the lock screen interface.

For example, when the second input is a swipe-up input, the electronic device can remove the currently displayed message card.

Step 201a2. In response to the second input, the electronic device updates the target message card.

In a possible example, the updating the target message card may be: switching the target message card.

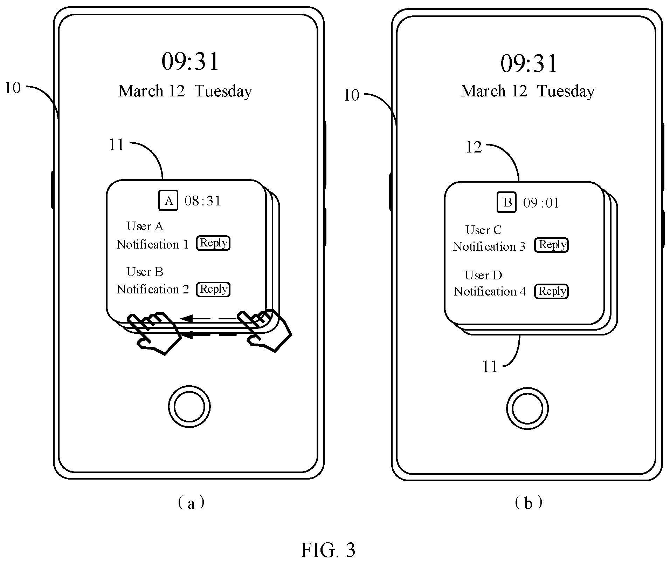

For example, as shown in FIG. 3(a), if the user wants to view preview information of a next application, the user can swipe left on the message card 11 of the application A. In this case, as shown in FIG. 3(b), the lock screen interface 10 displays a message card 12 of an application B, and switches the message card 11 of the application A to a bottom layer.

In another possible example, the updating the target message card may be: removing the target message card.

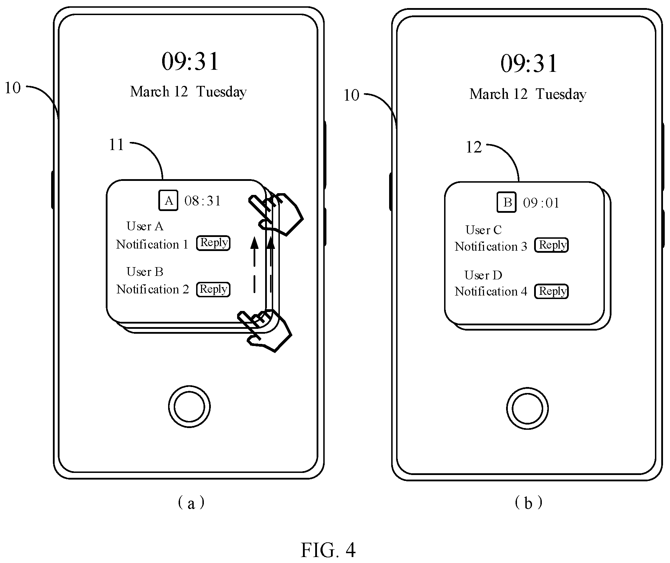

For example, as shown in FIG. 4(a), if the user wants to remove the currently displayed message card of the application, the user can swipe up on the message card 11 of the application A. In this case, as shown in FIG. 4(b), the lock screen interface 10 displays the message card 12 of the application B, and removes the message card 11 of the application A.

In this way, the current message card is cleared or the current message card is switched by receiving the user input, thereby improving the flexibility of the electronic device in displaying message cards.

In another possible embodiment, the user can view message content of the message displayed on the message card by performing an input for the message card.

Optionally, in an embodiment of this application, after step 201a, the method for operating a lock screen interface in the embodiments of this application may further include the following steps 201a3 and 201a4.

Step 201a3. The electronic device receives a third input for the target message card.

In the embodiment of this application, the third input is used to trigger the electronic device to display the application interface corresponding to the target message card.

In the embodiment of this application, the third input may be a tap input, a long-press input, or other feasible inputs for the target message card.

For example, when the third input is a tap input, the electronic device can display, in full screen, message content of the message displayed on the target message card tapped by the user.

For example, when the third input is a long-press input, the electronic device can display, in a small window, message content of the message displayed on the target message card tapped by the user.

Step 201a4. In response to the third input, the electronic device displays a first application page.

In the embodiment of this application, the first application page is an application page of an application corresponding to the target message card.

In a possible example, the displaying a first application page may be: displaying the first application page in full screen.

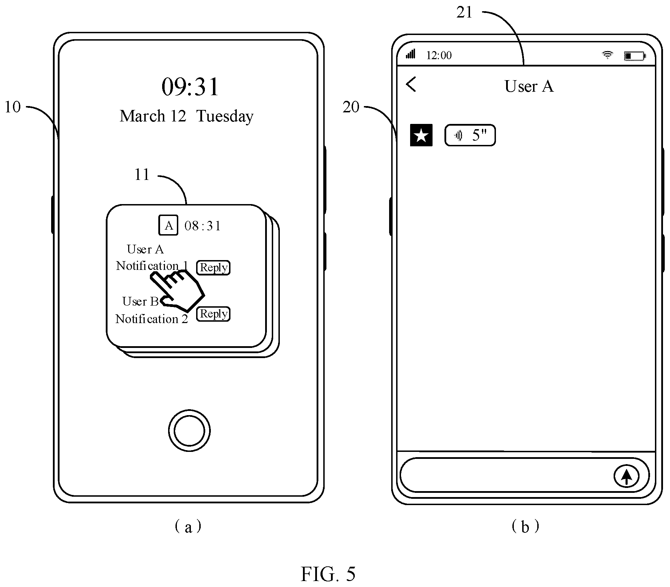

For example, as shown in FIG. 5(a), if the user taps (that is, the third input) notification 1 on the message card 11 of the application A. In this case, as shown in FIG. 5(b), the electronic device displays an application page 21 of the application A in full screen on the interface 20.

In another possible example, the displaying a first application page may be: displaying the first application page in a small window.

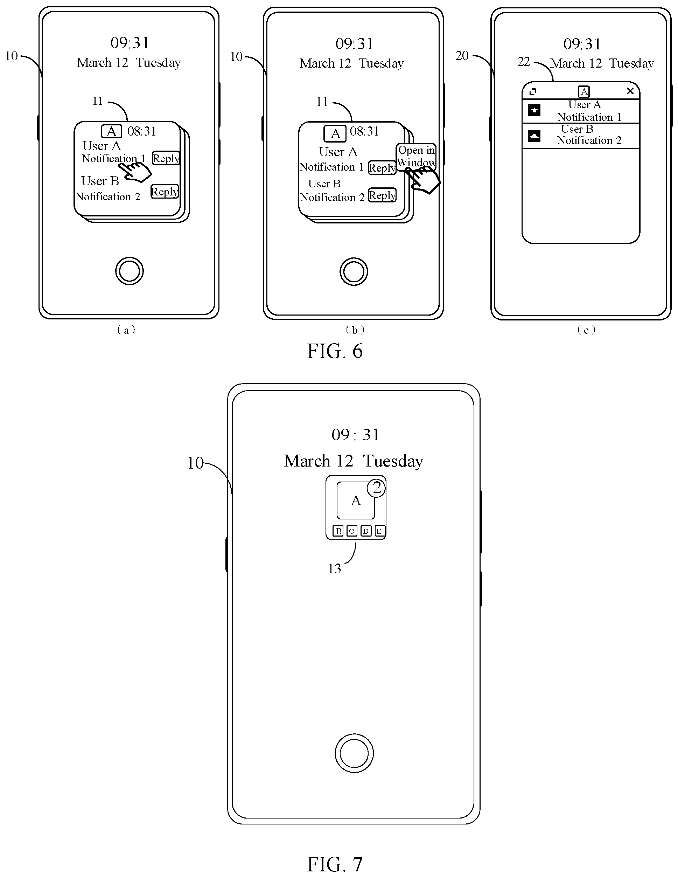

For example, as shown in FIG. 6(a), if the user long-presses (that is, the third input) notification 1 on the message card 11 of the application A, the lock screen interface 10 displays an "Open in Window" control, as shown in FIG. 6(b). After the user taps the "Open in Window" control, the interface 20 displays an application page 22 of the application A in a small window, as shown in FIG. 6(c).

In this way, by receiving the user input for the message card, the electronic device is triggered to display the interface for the message on the message card, thereby improving the convenience for the user to view the message.

Optionally, in an embodiment of this application, the step 201 that the electronic device displays multiple messages on the lock screen interface may include the following step 201b.

Step 201b. The electronic device displays a collection icon.

In the embodiment of this application, the collection icon includes multiple icons respectively corresponding to the multiple messages.

For example, the multiple icons may be application icons of the applications corresponding to the multiple messages.

For example, one application icon may correspond to one message or multiple messages.

For example, as shown in FIG. 7, the lock screen interface 10 displays a collection icon 13, and the collection icon 13 contains application icons corresponding to five applications (for example, an application A, an application B, an application C, an application D, and an application E).

Further optionally, in an embodiment of this application, with reference to the above step 201b, before the step 202, the method for operating a lock screen interface in the embodiments of this application may further include the following steps 301 and 302.

Step 301. The electronic device receives a second input for the collection icon.

In the embodiment of this application, the second input is used to trigger the electronic device to display each application icon in the collection icon.

In the embodiment of this application, the second input may include a tap input for the collection icon, or other feasible inputs, which is not limited in the embodiments of this application.

Step 302. In response to the second input, the electronic device cancels the display of the collection icon and respectively displays the multiple icons.

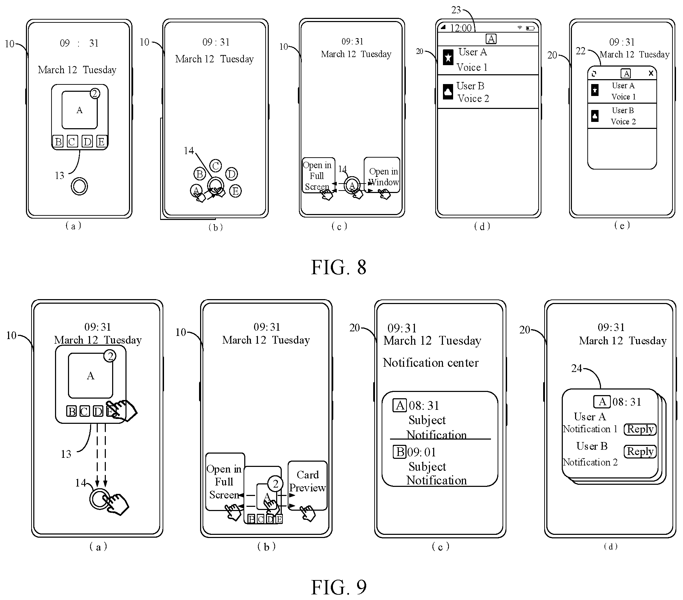

For example, as shown in FIG. 8(a), the user taps (that is, the second input) the collection icon 13. In this case, as shown in FIG. 8(b), the lock screen interface 10 displays five application icons (for example, an application icon A, an application icon B, an application icon C, an application icon D, and an application icon E).

Further optionally, in an embodiment of this application, with reference to the above step 302, the step 202 that the electronic device receives a first input for a target message among the multiple messages may include the following step 303.

Step 303. The electronic device receives a first input for a target icon among the multiple icons.

In the embodiment of this application, the target icon is an application icon corresponding to the target message.

In this way, the application icons corresponding to multiple messages is incorporated into one collection icon, and each application icon is displayed only when the input for the collection icon is received, thereby improving the tidiness of the lock screen interface of the electronic device.

Optionally, in an embodiment of this application, the lock screen interface includes a fingerprint unlock area, and the step 202 that the electronic device receives a first input for a target message among the multiple messages may include the following step 202b.

Step 202b. The electronic device receives a first input for a target message among the multiple messages.

The first input indicates to update a display position of the target message to the fingerprint unlock area.

In the embodiment of this application, the first input may be a drag input for the target message, or other feasible inputs, which is not limited in the embodiments of this application.

Further, with reference to the above step 202b, the step 203 that the electronic device displays the interface displayed after performing the target operation on the target message may include the following step 203b.

Step 203b. The electronic device displays a message interface corresponding to the target message in a small window in a case that an end position of the first input is in a first area of the fingerprint unlock area; or displays a message interface corresponding to the target message in full screen in a case that an end position of the first input is in a second area of the fingerprint unlock area.

In the embodiment of this application, the first area is used for indicating the electronic device to display the message interface corresponding to the target message in a small window.

For example, the small window display may be displaying a floating window on the screen of the electronic device.

In the embodiment of this application, the second area is used for indicating the electronic device to display the message interface corresponding to the target message in full screen.

For example, as shown in FIG. 8(b), the lock screen interface 10 also displays a fingerprint unlock area 14. If the user wants to view message content corresponding to the application A, the user can drag (that is, the first input) the application icon A (that is, the target message) to the fingerprint unlock area 14. As shown in FIG. 8(c), the fingerprint unlock area 14 displays an "Open in Full Screen" control on the left side, and displays the "Open in Window" control on the right side. If the user continues to drag the application icon A to the "Open in Full Screen" control (that is, the second area), the interface 20 displays the application page 23 of the application A in full screen, as shown in FIG. 8 (d). If the user continues to drag the application icon A to the "Open in Window" control (that is, the first area), the interface 20 displays the application page 22 of the application A in a small window, as shown in FIG. 8(e).

Optionally, in an embodiment of this application, with reference to the above step 201b, the step 202 that the electronic device receives a first input for a target message among the multiple messages may include the following step 202c.

Step 202c. The electronic device receives a first input for a collection icon.

In the embodiment of this application, the first input may be a drag input for the collection icon, or other feasible inputs, which is not limited in the embodiments of this application.

Further, with reference to the above step 202c, the step 203 that the electronic device displays the interface displayed after performing the target operation on the target message may include the following step 203c.

Step 203c. The electronic device displays at least one message card in a case that an end position of the first input is in a first area of the fingerprint unlock area; or displays a message window in a case that an end position of the first input is in a second area of the fingerprint unlock area.

In the embodiment of this application, one message card among the at least one message card displays message content corresponding to an application indicated by an application icon.

For example, the message content may be unread notification message content.

In the embodiment of this application, the message window displays message content corresponding to an application indicated by at least one application icon.

For example, as shown in FIG. 9(a), if the user wants to view a notification message in the collection icon 13, the user can drag (that is, the first input) the collection icon 13 to the fingerprint unlock area 14. Next, as shown in FIG. 9(b), the fingerprint unlock area 14 displays the "Open in Full Screen" control on the left side, and displays a "Card Preview" control on the right side. If the user continues to drag the collection icon 13 to the "Open in Full Screen" control (that is, the second area), the message content of the application A and the application B is displayed in the form of a message window on the interface 20, as shown in FIG. 9 (c). If the user continues to drag the collection icon 13 to the "Card Preview" control (that is, the first area), the interface 20 displays a message card 24 of the application A and displays message cards of the application B and the application C in an overlaid manner, as shown in FIG. 9(d).

In this way, after the lock screen is unlocked, the electronic device can choose to display the message content of multiple messages in different ways, allowing the user to view unread notification messages more conveniently.

Optionally, in an embodiment of this application, with reference to the above step 201b, the method for operating a lock screen interface in the embodiments of this application may further include the following steps 304 and 305.

Step 304. The electronic device receives a fourth input for the collection icon.

In the embodiment of this application, the fourth input is used to trigger the electronic device to remove the collection icon.

In the embodiment of this application, the fourth input may be a drag input for the collection icon, or other feasible inputs, which is not limited in the embodiments of this application.

Step 305. In response to the fourth input, the electronic device removes the collection icon.

In the embodiment of this application, after receiving the fourth input, the electronic device may clear all application icons in the collection icon to remove the collection icon control.

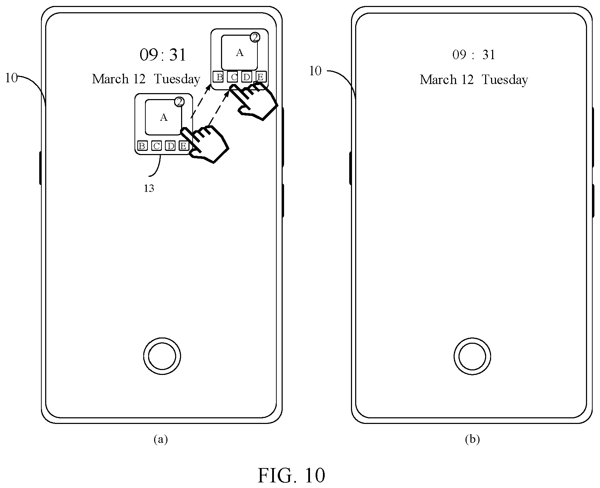

For example, with reference to FIG. 7, as shown in FIG. 10(a), if the user wants to remove the collection icon 13, the user can drag the collection icon 13 upward (that is, the fourth input) for a specific distance. In this case, as shown in FIG. 10(b), the collection icon 13 is no longer displayed on the lock screen interface 10.

In this way, the collection icon can be removed at a time by receiving the user input for the collection icon, allowing the electronic device to manage the collection icon more conveniently.

Optionally, in an embodiment of this application, with reference to the above step 201b, the method for operating a lock screen interface in the embodiments of this application may further include the following steps 306 and 307.

Step 306. The electronic device receives a fifth input for the collection icon.

In the embodiment of this application, the fifth input is used to trigger the electronic device to update the collection icon.

In the embodiment of this application, the fifth input may be a drag input for the collection icon, or other feasible inputs, which is not limited in the embodiments of this application.

Step 307. In response to the fifth input, the electronic device updates the collection icon.

In the embodiment of this application, after receiving the fifth input, the electronic device can clear the first application icon in the collection icon control and display a collection icon obtained after the clearing.

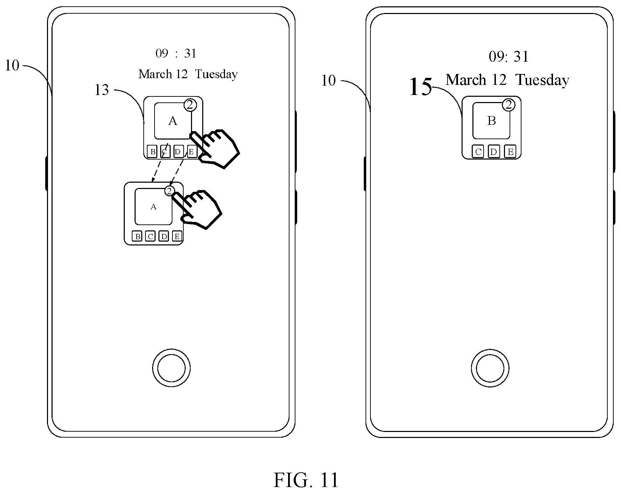

For example, with reference to FIG. 7, as shown in FIG. 11(a), if the user wants to clear the application icon A in the collection icon 13, the user can drag the collection icon 13 downward (that is, the fifth input) for a specific distance. In this case, as shown in FIG. 11(b), the lock screen interface 10 displays a collection icon 15 obtained after the clearing, where the collection icon 15 does not include the application icon A.

In this way, some application icons or all application icons are cleared by receiving the user input, improving the flexibility of the electronic device in displaying collection icons.

Optionally, in an embodiment of this application, the lock screen interface includes multiple touch areas.

In the embodiment of this application, each of the multiple touch areas corresponds to at least one functional module.

For example, the multiple messages are messages from the functional module.

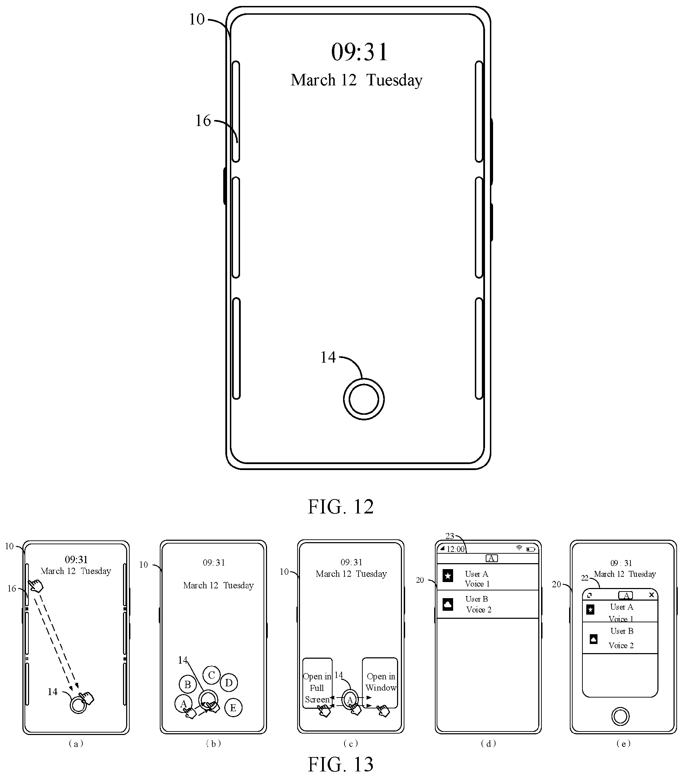

For example, as shown in FIG. 12, the lock screen interface 10 displays six touch areas (such as a touch area 16).

Further optionally, in an embodiment of this application, in a case that the lock screen interface includes multiple touch areas, the step 202 that the electronic device receives a first input for a target message among the multiple messages may include the following step 202d.

Step 202d. The electronic device receives a first input for a first touch area among the multiple touch areas.

In the embodiment of this application, the first input may be a tap input for the first touch area, a swipe input, or other feasible inputs, which is not limited in the embodiments of this application.

In the embodiment of this application, the target message is a message from a functional module corresponding to the first touch area among the multiple messages.

It should be noted that the first touch area is any one of the multiple touch areas.

In the embodiment of this application, the multiple touch areas do not display a function identifier of a corresponding functional module.

In this way, multiple touch areas are displayed on the lock screen interface, and each touch area corresponds to at least one functional module, making the lock screen interface of the electronic device tidier.

Optionally, in an embodiment of this application, the lock screen interface further includes a fingerprint unlock area, and before the above step 202d, the method for operating a lock screen interface in the embodiments of this application may further include the following steps 401 and 402.

Step 401. The electronic device receives a sixth input of swiping from the first touch area to the fingerprint unlock area.

In the embodiment of this application, the sixth input is used to trigger the electronic device to display a function identifier of the functional module corresponding to the touch area.

In the embodiment of this application, the sixth input may be a swipe input for the first touch area, or other feasible inputs, which is not limited in the embodiments of this application.

Step 402. In response to the sixth input, the electronic device displays a function identifier of a functional module corresponding to the first touch area.

In the embodiment of this application, the function identifier may be an application function identifier of an application installed in the electronic device, or a function identifier of a system function of the electronic device.

For example, the function identifier may be different function identifiers of a same application or function identifiers of different applications.

Optionally, in an embodiment of this application, with reference to the above step 402, the step 202d that the electronic device receives a first input for the first touch area among the multiple touch areas may include the following step 403.

Step 403. The electronic device receives a first input of dragging a first function identifier among function identifiers of the functional module corresponding to the first touch area to the fingerprint unlock area.

In the embodiment of this application, the first input may be a drag input for the first function identifier, or other feasible inputs, which is not limited in the embodiments of this application.

In the embodiment of this application, the first function identifier is any one of the function identifiers of the functional module corresponding to the first touch area.

For example, as shown in FIG. 13(a), if the user wants to open an application function A, the user can swipe (that is, the sixth input) from the touch area 16 (that is, the first touch area) to the fingerprint unlock area 14. In this case, as shown in FIG. 13(b), the lock screen interface displays five function identifiers (for example, a function identifier A, a function identifier B, a function identifier C, a function identifier D, and a function identifier E). Then, if the user drags (that is, the first input) the function identifier A to the fingerprint unlock area 14. As shown in FIG. 13(c), the fingerprint unlock area 14 displays the "Open in Full Screen" control on the left side, and displays the "Open in Window" control on the right side. If the user continues to drag the function identifier A to the "Open in Full Screen" control, the interface 20 displays the application page 23 of the application A in full screen, as shown in FIG. 13(d). If the user continues to drag the function identifier A to the "Open in Window" control, the interface 20 displays the application page 22 of the application A in a small window, as shown in FIG. 13(e).

In this way, by receiving the input for the touch area, the electronic device is triggered to display an interface of the function corresponding to the touch area, thereby improving the efficiency of the electronic device in launching functions.

Optionally, in an embodiment of this application, in a case that the lock screen interface includes multiple touch areas, the method for operating a lock screen interface in the embodiments of this application may further include the following steps 404 and 405.

Step 404. The electronic device receives a seventh input.

In the embodiment of this application, the seventh input is used to trigger the electronic device to add a function identifier to the touch area.

In the embodiment of this application, the seventh input may be a tap input for an application icon, or other feasible inputs, which is not limited in the embodiments of this application.

Step 405. In response to the seventh input, the electronic device sets a function corresponding to a second touch area.

In the embodiment of this application, the second touch area may be any one of the multiple touch areas.

For example, one application icon may include one function identifier or multiple function identifiers.

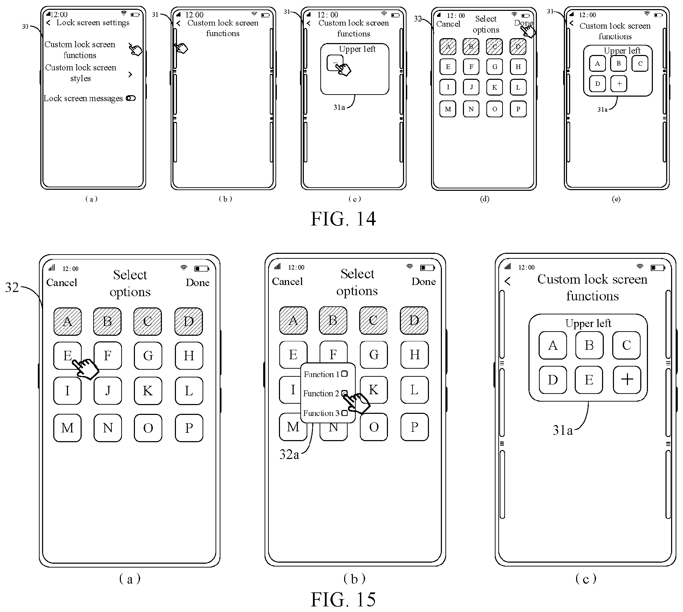

In Example 1, one application icon includes one function identifier. As shown in FIG. 14(a), a setup interface 30 of the electronic device displays a "Custom lock screen functions" control, a "Custom lock screen styles" control, and a "Lock screen messages" control. If the user taps the "Custom lock screen functions" control, a Custom lock screen functions interface 31 displays six touch areas, as shown in FIG. 14(b). Then, the user taps the touch area in the upper left, as shown in FIG. 14 (c), the Custom lock screen functions interface 31 displays an edit function panel 31a, where the edit function panel 31a displays a "+" button. Then, the user taps the "+" button. As shown in FIG. 14(d), a select application interface 32 displays multiple application icons. In this case, the user can select (that is, the seventh input) the application icon A, the application icon B, the application icon C, and an application icon D, and tap a "Done" button. As shown in FIG. 14(e), the edit function panel 31a displays the application icon A, the application icon B, the application icon C, the application icon D, and the "+" button.

In Example 2, one application icon includes three functions. With reference to FIG. 14(c), as shown in FIG. 15(a), the user can long-press (that is, the seventh input) the application icon E. In this case, as shown in FIG. 15(b), a function identifier menu 32a is displayed on the application icon E, and then the user can select Function 2. Then, as shown in FIG. 15(c), the function 2 is added to the edit function panel 31a, and the edit function panel 31a displays the application icon A, the application icon B, the application icon C, the application icon D, and the "+" button.

In this way, multiple function identifiers can be added to the touch area by receiving the user input, enriching the function entries of the lock screen interface.

Optionally, in an embodiment of this application, in a case that the lock screen interface includes multiple touch areas, the method for operating a lock screen interface in the embodiments of this application may further include the following steps 406 and 407.

Step 406. The electronic device receives an eighth input.

In the embodiment of this application, the eighth input is used to trigger the electronic device to adjust a height of the touch area.

In the embodiment of this application, the eighth input may be a drag input for an adjustment button, or other feasible inputs, which is not limited in the embodiments of this application.

For example, the adjustment button is located between any two adjacent touch areas among the multiple touch areas.

Step 407. In response to the eighth input, the electronic device adjusts a height of a third touch area.

In the embodiment of this application, the third touch area may be any two adjacent touch areas among the multiple touch areas.

In the embodiment of this application, after the electronic device adjusts a height of one of the any two adjacent touch areas, a height of the other touch area is adaptively adjusted.

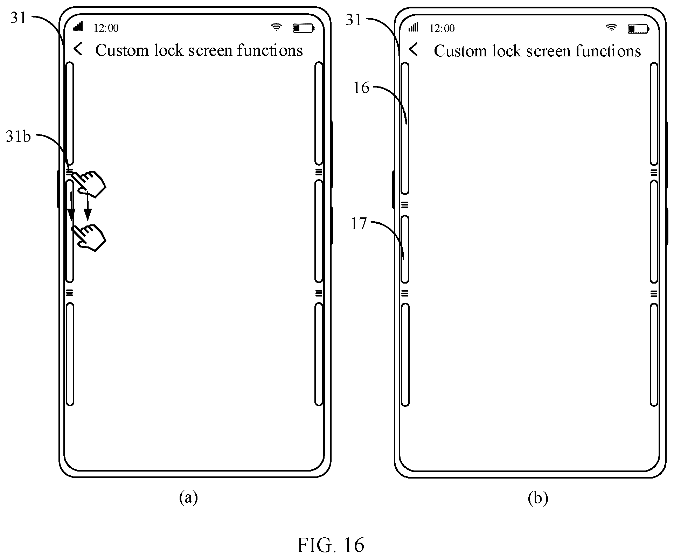

For example, with reference to FIG. 14(b), as shown in FIG. 16(a), the Custom lock screen functions interface 31 also displays four adjustment buttons (such as an adjustment button 31b). If the user drags (that is, the eighth input) the adjustment button 31b downward, as shown in FIG. 16(b), a height of a touch area 16 increases, and a height of a touch area 15 decreases.

In this way, the height of the touch area can be adjusted by dragging the adjustment button, improving the convenience of the electronic device in setting touch areas.

Optionally, in an embodiment of this application, in a case that the lock screen interface includes multiple touch areas, the method for operating a lock screen interface in the embodiments of this application may further include the following steps 408 and 409.

Step 408. The electronic device receives a ninth input.

In the embodiment of this application, the ninth input is used to trigger the electronic device to set styles of the multiple touch areas.

In the embodiment of this application, the ninth input may be a tap input for the touch area, or other feasible inputs, which is not limited in the embodiments of this application.

Step 409. In response to the ninth input, the electronic device sets the styles of the multiple touch areas.

In the embodiment of this application, the styles of the multiple touch areas include: a touch area color, a touch area transparency, and a touch area width.

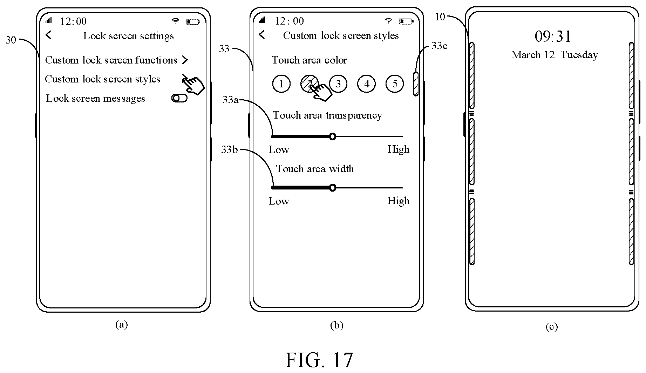

For example, with reference to FIG. 14(a), as shown in FIG. 17(a), after the user taps the "Custom lock screen styles" control on the Settings interface 30, the Custom lock screen styles interface 33 displays a touch area color options area, a touch area transparency adjustment bar 33a, a touch area width adjustment bar 33b, and a touch area style preview window 33c, as shown in FIG. 17(b). If the user taps color 2 in the touch area color options area, the touch area style preview window 33c is displayed in color 2. Then, after the user switches to the lock screen interface 10, as shown in FIG. 17 (c), all touch areas on the lock screen interface 10 are displayed in color 2.

In addition, with reference to FIG. 17(b), the user can also use the touch area transparency adjustment bar 33a and the touch area width adjustment bar 33b to adjust the transparency and width of the touch area.

In this way, the styles of the touch areas are customized, enriching the display of touch areas on the electronic device.

Optionally, in an embodiment of this application, the step 201 that the electronic device displays multiple messages on the lock screen interface may include the following step 201c.

Step 201c. The electronic device displays a first notification message.

In the embodiment of this application, the first notification message may be at least one of the multiple messages.

In the embodiment of this application, the first notification message belongs to the communication message type, for example, missed call or unread message.

Further, with reference to the above step 201c, the step 202 that the electronic device receives a first input for a target message among the multiple messages may include the following step 202e.

Step 202e. The electronic device receives a first input for the first notification message.

In the embodiment of this application, the first input may be a tap input for the first notification message, a drag input, or other feasible inputs, which is not limited in the embodiments of this application.

Further, with reference to the above step 202e, the step 203 that the electronic device displays the interface displayed after performing the target operation on the target message may include the following step 203d.

Step 203d. The electronic device displays a reply window corresponding to the first notification message.

For example, the reply window may include a voice reply window, a text reply window, and the like.

It should be noted that the reply windows corresponding to the different first notification messages are different.

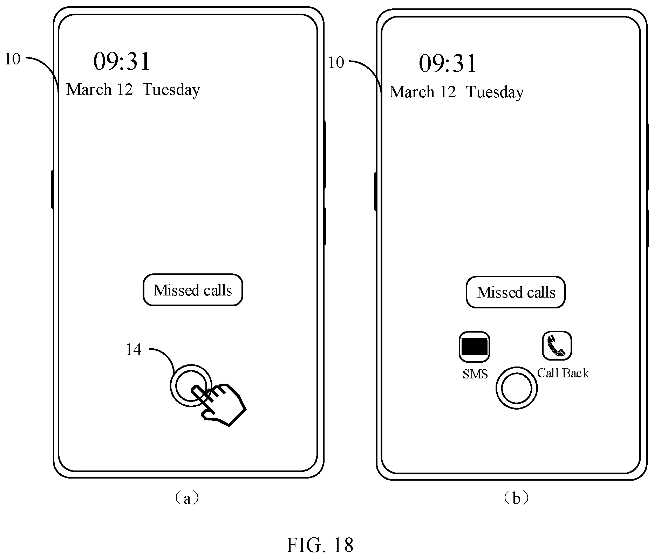

In Example 3, as shown in FIG. 18(a), when the electronic device receives a call reminder and the call is missed, the lock screen interface 10 displays "Missed calls" (that is, the first notification message). In this case, if the user taps the fingerprint unlock area 14, the lock screen interface 10 displays an "SMS" control and a "Call Back" control (that is, the reply window), as shown in FIG. 18(b).

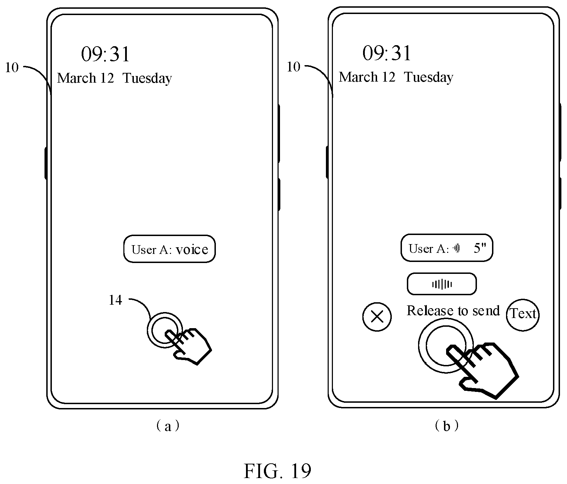

In Example 4, as shown in FIG. 19(a), when the electronic device receives a voice message from user A in a communication software, the lock screen interface 10 displays "User A: voice" (that is, the first notification message). In this case, if the user long-presses the fingerprint unlock area 14, the electronic device allows voice reply (that is, the reply window) on the lock screen interface 10, as shown in FIG. 19(b).

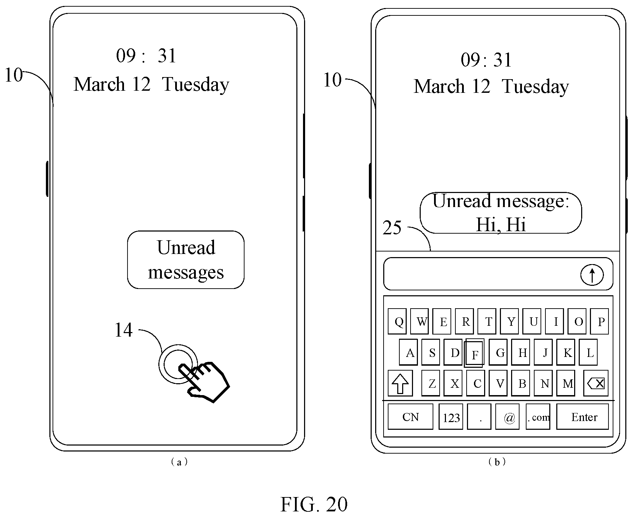

In Example 5, as shown in FIG. 20(a), when the electronic device receives a text message, the lock screen interface 10 displays "Unread messages" (that is, the first notification message). In this case, if the user taps the fingerprint unlock area 14, the lock screen interface 10 displays a text keypad 25 (that is, the reply window), as shown in FIG. 20(b).

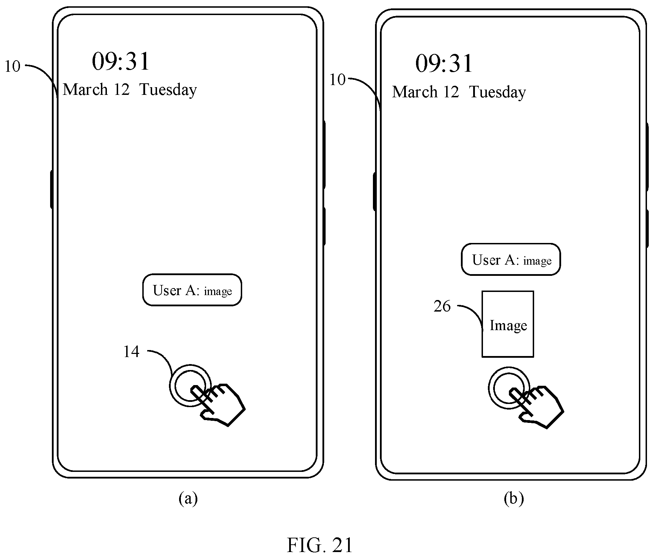

In Example 6, as shown in FIG. 21(a), when the electronic device receives an image message from user A in a communication software, the lock screen interface 10 displays "User A: image" (that is, the first notification message). In this case, if the user long-presses the fingerprint unlock area 14, the electronic device can display an image 26 on the lock screen interface 10, as shown in FIG. 21(b).

The method for operating a lock screen interface in the embodiments of this application can be executed by an apparatus for operating a lock screen interface. In the embodiments of this application, the method for operating a lock screen interface being executed by an apparatus for operating a lock screen interface is used as an example to describe the apparatus for operating a lock screen interface provided in an embodiment of this application.

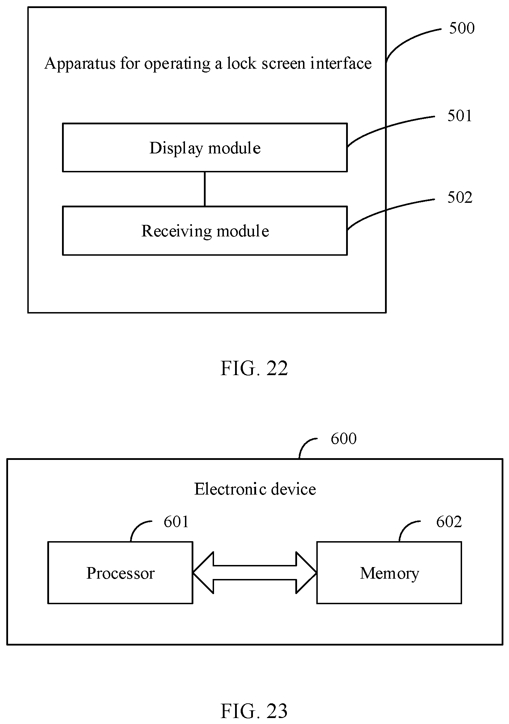

An embodiment of this application provides an apparatus for operating a lock screen interface. As shown in FIG. 22, the apparatus 500 for operating a lock screen interface includes: a display module 501 and a receiving module 502. The display module 501 is configured to display multiple messages on the lock screen interface. The receiving module 502 is configured to receive a first input for a target message among the multiple messages displayed by the display module 501. The display module 501 is further configured to, in response to the first input received by the receiving module 502, unlock the lock screen interface and display a target interface; where the target interface includes at least one of the following: an interface displayed after performing a target operation on the target message, an interface displayed after performing a next operation corresponding to the target message on the target message, and an interface including an identifier of a next operation corresponding to the target message.

Optionally, in an embodiment of this application, the display module 501 is specifically configured to display multiple message cards on the lock screen interface, where each message card includes at least one of the multiple messages; the receiving module 502 is specifically configured to receive a first input for a target message card among the multiple message cards displayed by the display module; and the display module 501 is specifically configured to display the target interface on the target message card.

Optionally, in an embodiment of this application, the display module 501 is specifically configured to display a collection icon, where the collection icon includes multiple icons corresponding to the multiple messages; the receiving module 502 is further configured to receive a second input for the collection icon displayed by the display module 501; the display module 501 is further configured to, in response to the second input received by the receiving module 502, cancel the display of the collection icon and respectively display the multiple icons; and the receiving module 502 is specifically configured to receive a first input for a target icon among the multiple icons displayed by the display module 501, where the target icon corresponds to the target message.

Optionally, in an embodiment of this application, the lock screen interface includes a fingerprint unlock area, and the receiving module 502 is specifically configured to receive the first input for the target message among the multiple messages, where the first input indicates to update a display position of the target message to the fingerprint unlock area; and the display module 501 is specifically configured to: display a message interface corresponding to the target message in a small window in a case that an end position of the first input is in a first area of the fingerprint unlock area; or display a message interface corresponding to the target message in full screen in a case that an end position of the first input is in a second area of the fingerprint unlock area.

Optionally, in an embodiment of this application, the lock screen interface includes multiple touch areas, each touch area corresponds to at least one functional module, and the multiple messages are messages from the functional module; and the receiving module 502 is specifically configured to receive a first input for a first touch area among the multiple touch areas; where the target message is a message from a functional module corresponding to the first touch area among the multiple messages.

According to the apparatus for operating a lock screen interface in the embodiments of this application, the apparatus for operating a lock screen interface can display multiple messages on the lock screen interface, and then receive a first input for a target message among the multiple messages, so as to unlock the lock screen interface and display a target interface; where the target interface includes at least one of the following: an interface displayed after performing a target operation on the target message, an interface displayed after performing a next operation corresponding to the target message on the target message, and an interface including an identifier of a next operation corresponding to the target message. In this way, the apparatus for operating a lock screen interface can unlock the lock screen interface and display the subsequent target interface by receiving an input from the user, thereby simplifying the steps for the apparatus for operating a lock screen interface to display the target interface.

The apparatus for operating a lock screen interface in the embodiments of this application may be an electronic device or a component in the electronic device, such as an integrated circuit or a chip. The electronic device may be a terminal or another device different from the terminal. For example, the electronic device may be a mobile phone, a tablet computer, a notebook computer, a palmtop computer, a vehicle-mounted electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like; or may be a server, a network attached storage (Network Attached Storage, NAS), a personal computer (personal computer, PC), a television (television, TV), a teller machine, a self-service machine, or the like. This is not specifically limited in the embodiments of this application.

The apparatus for operating a lock screen interface in the embodiments of this application may be an apparatus having an operating system. The operating system may be an Android (Android) operating system, an iOS operating system, or other possible operating systems. This is not specifically limited in the embodiments of this application.

The apparatus for operating a lock screen interface in the embodiments of this application can implement each process implemented in the method embodiments of FIGs. 1 to 21. To avoid repetition, details are not described herein again.

Optionally, as shown in FIG. 23, an embodiment of this application further provides an electronic device 600 including a processor 601 and a memory 602. The memory 602 stores a program or instructions that are executable on the processor 601, and when the program or instructions are executed by the processor 601, steps of the foregoing method embodiments for operating a lock screen interface are implemented, with the same technical effects achieved. To avoid repetition, details are not described herein again.

It should be noted that the electronic device in the embodiment of this application includes the foregoing mobile electronic device and non-mobile electronic device.

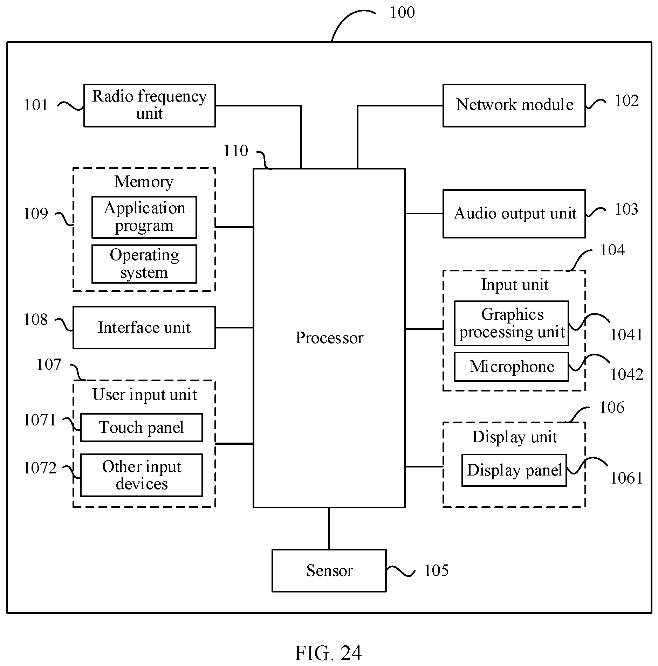

FIG. 24 is a schematic diagram of a hardware structure of an electronic device according to an embodiment of this application.

The electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

Those skilled in the art can understand that the electronic device 100 may further include a power supply (for example, a battery) supplying power to various components. The power supply may be logically connected to the processor 110 through a power management system, so as to implement functions such as charging management, discharging management, and power consumption management by using the power management system. The structure of the electronic device shown in FIG. 24 does not constitute a limitation on the electronic device. The electronic device may include more or fewer components than shown in the figure, or a combination of some components, or the components disposed differently. Details are not described herein again.

The display unit 106 is configured to display multiple messages on the lock screen interface. The user input unit 107 is configured to receive a first input for a target message among the multiple messages displayed by the display unit 106. The display unit 106 is further configured to, in response to the first input received by the user input unit 107, unlock the lock screen interface and display a target interface; where the target interface includes at least one of the following: an interface displayed after performing a target operation on the target message, an interface displayed after performing a next operation corresponding to the target message on the target message, and an interface including an identifier of a next operation corresponding to the target message.

Optionally, in an embodiment of this application, the display unit 106 is specifically configured to display multiple message cards on the lock screen interface, where each message card includes at least one of the multiple messages; the user input unit 107 is specifically configured to receive a first input for a target message card among the multiple message cards displayed by the display module; and the display unit 106 is specifically configured to display the target interface on the target message card.

Optionally, in an embodiment of this application, the display unit 106 is specifically configured to display a collection icon, where the collection icon includes multiple icons corresponding to the multiple messages; the user input unit 107 is further configured to receive a second input for the collection icon displayed by the display unit 106; the display unit 106 is further configured to, in response to the second input received by the user input unit 107, cancel the display of the collection icon and respectively display the multiple icons; and the user input unit 107 is specifically configured to receive a first input for a target icon among the multiple icons displayed by the display unit 106, where the target icon corresponds to the target message.

Optionally, in an embodiment of this application, the lock screen interface includes a fingerprint unlock area, and the user input unit 107 is specifically configured to receive the first input for the target message among the multiple messages, where the first input indicates to update a display position of the target message to the fingerprint unlock area; and the display unit 106 is specifically configured to: display a message interface corresponding to the target message in a small window in a case that an end position of the first input is in a first area of the fingerprint unlock area; or display a message interface corresponding to the target message in full screen in a case that an end position of the first input is in a second area of the fingerprint unlock area.

Optionally, in an embodiment of this application, the lock screen interface includes multiple touch areas, each touch area corresponds to at least one functional module, and the multiple messages are messages from the functional module; and the user input unit 107 is specifically configured to receive a first input for a first touch area among the multiple touch areas; where the target message is a message from a functional module corresponding to the first touch area among the multiple messages.

According to the electronic device in the embodiment of this application, the electronic device can display multiple messages on the lock screen interface, and then receive a first input for a target message among the multiple messages, so as to unlock the lock screen interface and display a target interface; where the target interface includes at least one of the following: an interface displayed after performing a target operation on the target message, an interface displayed after performing a next operation corresponding to the target message on the target message, and an interface including an identifier of a next operation corresponding to the target message. In this way, the electronic device can unlock the lock screen interface and display the subsequent target interface by receiving an input from the user, thereby simplifying the steps for the electronic device to display the target interface.

It can be understood that in this embodiment of this application, the input unit 104 may include a graphics processing unit (Graphics Processing Unit, GPU) 1041 and a microphone 1042. The graphics processing unit 1041 processes image data of a still picture or video obtained by an image capture apparatus (such as a camera) in a video capture mode or an image capture mode. The display unit 106 may include a display panel 1061, and the display panel 1061 may be configured in a form of a liquid crystal display, an organic light-emitting diode, or the like. The user input unit 107 includes at least one of a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function key (such as a volume control key or an on/off key), a trackball, a mouse, and a joystick. Details are not described herein.

The memory 109 may be configured to store software programs and various data. The memory 109 may mainly include a first storage area for storing programs or instructions and a second storage area for storing data. The first storage area may store an operating system, an application program or instructions required by at least one function (for example, a sound play function or an image play function), and the like. Additionally, the memory 109 may include a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct Rambus dynamic random access memory (Direct Rambus RAM, DRRAM). The memory 109 in the embodiment of this application includes but is not limited to these and any other suitable types of memory.

The processor 110 may include one or more processing units. Optionally, an application processor and a modem processor are integrated in the processor 110, where the application processor mainly processes operations related to an operating system, a user interface, an application program, and the like, and the modem processor mainly processes wireless communication signals, such as a baseband processor. It can be understood that the modem processor may alternatively be not integrated in the processor 110.

An embodiment of this application further provides a readable storage medium. The readable storage medium stores a program or instructions. When the program or instructions are executed by a processor, each process of the foregoing method embodiment for operating a lock screen interface is implemented, with the same technical effects achieved. To avoid repetition, details are not described herein again.

The processor is a processor in the electronic device described in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement each process of the foregoing method embodiment for operating a lock screen interface, with the same technical effects achieved. To avoid repetition, details are not described herein again.

It should be understood that the chip mentioned in the embodiments of this application may also be referred to as a system-level chip, a system chip, a chip system, a system-on-chip, or the like.

The embodiment of this application provides a computer program product, where the program product is stored in a storage medium, and the program product is executed by at least one processor to implement each process of the foregoing method embodiments for operating a lock screen interface, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this disclosure.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A method for operating a lock screen interface, wherein the method comprises:
displaying multiple messages on the lock screen interface;
receiving a first input for a target message among the multiple messages; and
in response to the first input, unlocking the lock screen interface and displaying a target interface; wherein
the target interface comprises at least one of the following:
an interface displayed after performing a target operation on the target message, an interface displayed after performing a next operation corresponding to the target message on the target message, and an interface comprising an identifier of a next operation corresponding to the target message.

2. The method according to claim 1, wherein the displaying multiple messages on the lock screen interface comprises:
displaying multiple message cards on the lock screen interface, wherein each message card comprises at least one of the multiple messages;
the receiving a first input for a target message among the multiple messages comprises:
receiving a first input for a target message card among the multiple message cards; and
the displaying a target interface comprises:
displaying the target interface on the target message card.

3. The method according to claim 1, wherein the displaying multiple messages on the lock screen interface comprises:
displaying a collection icon, wherein the collection icon comprises multiple icons respectively corresponding to the multiple messages;
before the receiving a first input for a target message among the multiple messages, the method further comprises:
receiving a second input for the collection icon;
in response to the second input, canceling the display of the collection icon and respectively displaying the multiple icons; and
the receiving a first input for a target message among the multiple messages comprises:
receiving a first input for a target icon among the multiple icons, wherein the target icon corresponds to the target message.

4. The method according to claim 1, wherein the lock screen interface comprises a fingerprint unlock area, and the receiving a first input for a target message among the multiple messages comprises:
receiving the first input for the target message among the multiple messages, wherein the first input indicates to update a display position of the target message to the fingerprint unlock area; and
the displaying the interface displayed after performing the target operation on the target message comprises:
displaying a message interface corresponding to the target message in a small window in a case that an end position of the first input is in a first area of the fingerprint unlock area; or
displaying a message interface corresponding to the target message in full screen in a case that an end position of the first input is in a second area of the fingerprint unlock area.

5. The method according to claim 1, wherein the lock screen interface comprises multiple touch areas, each touch area corresponds to at least one functional module, and the multiple messages are messages from the functional module; and
the receiving a first input for a target message among the multiple messages comprises:
receiving a first input for a first touch area among the multiple touch areas; wherein
the target message is a message from a functional module corresponding to the first touch area among the multiple messages.

6. An apparatus for operating a lock screen interface, wherein the apparatus comprises: a display module and a receiving module, wherein
the display module is configured to display multiple messages on the lock screen interface;
the receiving module is configured to receive a first input for a target message among the multiple messages displayed by the display module; and
the display module is further configured to, in response to the first input received by the receiving module, unlock the lock screen interface and display a target interface; wherein
the target interface comprises at least one of the following:
an interface displayed after performing a target operation on the target message, an interface displayed after performing a next operation corresponding to the target message on the target message, and an interface comprising an identifier of a next operation corresponding to the target message.

7. The apparatus according to claim 6, wherein
the display module is specifically configured to display multiple message cards on the lock screen interface, wherein each message card comprises at least one of the multiple messages;
the receiving module is specifically configured to receive a first input for a target message card among the multiple message cards displayed by the display module; and
the display module is specifically configured to display the target interface on the target message card.

8. The apparatus according to claim 6, wherein
the display module is specifically configured to display a collection icon, wherein the collection icon comprises multiple icons respectively corresponding to the multiple messages;
the receiving module is further configured to receive a second input for the collection icon displayed by the display module;
the display module is further configured to, in response to the second input received by the receiving module, cancel the display of the collection icon and respectively display the multiple icons; and
the receiving module is specifically configured to receive a first input for a target icon among the multiple icons displayed by the display module, wherein the target icon corresponds to the target message.

9. The apparatus according to claim 6, wherein the lock screen interface comprises a fingerprint unlock area,
the receiving module is specifically configured to receive the first input for the target message among the multiple messages, wherein the first input indicates to update a display position of the target message to the fingerprint unlock area; and
the display module is specifically configured to:
display a message interface corresponding to the target message in a small window in a case that an end position of the first input is in a first area of the fingerprint unlock area; or
display a message interface corresponding to the target message in full screen in a case that an end position of the first input is in a second area of the fingerprint unlock area.

10. The apparatus according to claim 6, wherein the lock screen interface comprises multiple touch areas, each touch area corresponds to at least one functional module, and the multiple messages are messages from the functional module; and
the receiving module is specifically configured to receive a first input for a first touch area among the multiple touch areas; wherein
the target message is a message from a functional module corresponding to the first touch area among the multiple messages.

11. An electronic device, comprising a processor and a memory, wherein the memory stores a program or instructions that are executable on the processor, and when the program or instructions are executed by the processor, the steps of the method for operating a lock screen interface according to any one of claims 1 to 5 are implemented.

12. A readable storage medium, wherein the readable storage medium stores a program or instructions, and when the program or instructions are executed by a processor, the steps of the method for operating a lock screen interface according to any one of claims 1 to 5 are implemented.

13. A chip, comprising a processor and a communication interface, wherein the communication interface is coupled to the processor, and the processor is configured to run a program or instructions to implement the method for operating a lock screen interface according to any one of claims 1 to 5.

14. A computer program product, wherein the program product is stored in a storage medium, and the program product is executed by at least one processor to implement the method for operating a lock screen interface according to any one of claims 1 to 5.

15. An electronic device, wherein the electronic device is configured to execute the method for operating a lock screen interface according to any one of claims 1 to 5.
